# EUROPÄISCHE PATENTSCHRIFT

(11) **EP 0 643 914 B1**
(45) Veröffentlichungstag und Bekanntmachung des Hinweises auf die Patenterteilung: **07.01.1999**
(21) Anmeldenummer: 94107409.8
(22) Anmeldetag: 13.05.1994
(51) Int. Cl.: A21C 5/02

(54) **Messkammerteigteilmaschine**
Dough divider with measuring chamber
Diviseur de pâte avec chambre de dosage

(30) Priorität: 21.09.1993 DE 4331972
(43) Veröffentlichungstag der Anmeldung: 22.03.1995
(73) Patentinhaber: Werner & Pfleiderer Lebensmitteltechnik GmbH, 91550 Dinkelsbühl (DE)
(72) Erfinder: Meier, Alexander, D-91602 Dürrwangen (DE); Zlatar, Stjepan, Dipl.-Ing., D-91550 Dinkelsbühl (DE)
(74) Vertreter: Rau, Manfred, Dr. Dipl.-Ing.

(56) Entgegenhaltungen:
- US-A- 4 177 030

## Beschreibung

Die Erfindung betrifft eine Messkammerteigteilmaschine mit einem Messkammerträger in dem in einer Reihe mehrere mit Messkolben ausgerüstete Messkammern angeordnet sind.

Teigteilmaschinen dieser Art sind allgemein bekannt und haben die Aufgabe aus einer grösseren in einem Trichter befindlichen Teigmasse definierte und hinsichtlich ihres Gewichtes gleichbleibende Teigteile zur Weiterverarbeitung für Brot oder Brötchen abzutrennen. Dabei werden die im Messkammerträger angeordneten Messkammern an einer unterhalb des Teigtrichters angeordneten Füllkammer teigabscherend vorbeibewegt. Hierbei kann der Messkammerträger als auf- und abbewegbarer Flachschieber gemäss DE 34 05 977 C1 oder als vor der Öffnung der Füllkammer angeordneter zylindrischer Drehschieber analog der DE 35 30 724 C1 ausgebildet sein.
In beiden Fällen ist der Hub der Messkolben veränderbar einstellbar und somit können innerhalb eines bestimmten Gewichtsbereiches mit der gleichen Messkammergrösse unterschiedlich Teilgewichte realisiert werden. Sollen andere Teilgewichte, die nicht mehr im Hubverstellungsbereich der Messkolben liegen, abgeteilt werden, so muss der ganze Messkammerträger gegen einen anderen mit entsprechend grösseren oder kleineren Messkammern ausgetauscht werden.

Auf Grund der kompakten Bauart, die wegen der geringen Platzverhältnissse in den meisten Backstuben erforderlich ist, ist der Austausch des Messkammerträgers bzw. auch die Reinigung der Messkammern-und kolben -zumal die Maschinen zumeist als kombinierte Teigteil-und Rundwirkmaschinen ausgebildet sind - nur in einer bestimmten Stellung des Messkammerträgers möglich.
Eine Reinigung der Messkammern-und kolben sowie der Füllkammern und des Füllkolbens sind vor jedem Teigwechsel und vor jeder längeren Stillsetzung (Feierabend) der Maschine erforderlich.

Zur Erreichung dieser Reinigungsstellungen (Messkammer bzw. Füllkolben) ist es erforderlich, dass durch mehrmaliges Betätigen der Start-Stop-Taste die jeweils gewünschte Stellung herangetippt wird, bzw. mittels Steckschlüssel von Hand in die mögliche Reinigungsstellung gedreht wird.

Aufgabe der Erfindung ist es, bei einer Messkammerteigteilmaschine die gewünschte Reinigungs- bzw. Ausbauposition für die Messkolben und für den Füllkolben schnell und exakt zu erreichen.

Diese Aufgabe wird erfindungsgemäss durch die Merkmale des Patentanspruches 1 gelöst.
Hiernach wird es erstmals möglich durch einen einfachen Knopfdruck die Teigteilmaschine an einer bestimmten Stellung zum Stillstand zu bringen, um die erforderlichen Reinigungsarbeiten vornehmen zu können. Damit entfällt ein erheblicher Zeitaufwand für das bisher notwendige Herantasten an diese Reinigungsstellung. Als Mittel zur Abfragung der Maschinenstellung und Abschaltung in einer bestimmten Anhalteposition sind Schalter, insbesondere Licht- oder Magnetschalter vorgesehen. Die genaue Anordnung der Lichtschranken oder Magnetschalter kann in Abhängigkeit des Maschinentypes unterschiedlich sein, sie ist überall dort möglich wo ein mit dem Messkammerträger oder Füllkolben im Zusammenhang stehender Bewegungsablauf der Maschine erfragt werden kann.
Durch die Merkmale der Patentansprüche 2 und 3 ist eine vorteilhafte mechanische Abfragung der Maschinenstellung aufgezeigt, die sich ohne grossen Aufwand an jeder Teigteilmaschine anbringen lässt und einen sicheren Stop in der Messkolben-bzw. der füllkolbenreinigungsstellung ermöglicht. Beim Anbringen der Nockenscheibe ist nur der Nachlauf der jeweiligen Maschine mit zu berücksichtigen und der für die jeweilige Reinigungsstellung zuständige Schalter zu betätigen.

Die Erfindung soll nachfolgend an Hand einer Zeichnung näher erläutert werden.

Es zeigt:
- Fig. 1: eine schematische Darstellung einer kombinierten Messkammerteigteil-und Rundwirkmaschine
- Fig. 2: Füllkammer und Messkammerträger als Einzelheit vergrössert
- Fig. 3: eine vergrösserte Darstellung der Nockenscheibe mit Endschalter und Schalttafel

Die Messkammerteigteilmaschine besteht im wesentlichen aus einer Füllkammer 2 mit einem darin axial vor-und zurückbeweglichen Füllkolben 3. Auf dem Gehäuse der Füllkammer 2 ist ein Teigtrichter 11 aufgesetzt. An der stirnseitigen öffnung der Füllkammer 2 ist ein um 90° verschwenkbarer Messkammerträger 4 angeordnet. Unterhalb des Messkammerträgers 4 befindet sich eine Wirktrommel 12 mit Wirkband 13 mit sich anschliessenden Spreizbändern 14 für den Abtransport der Teiglinge.

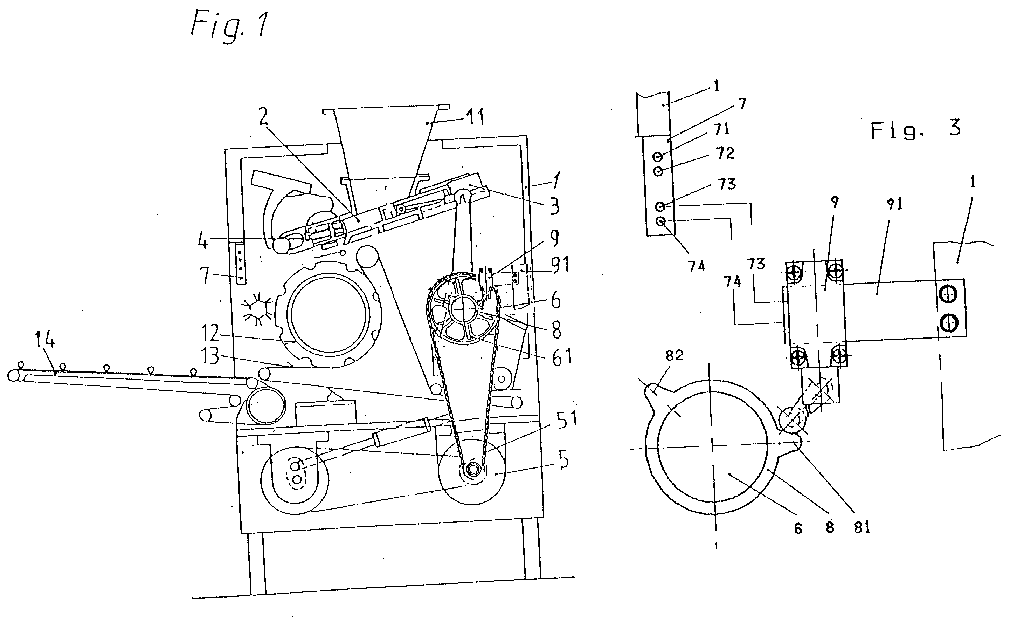

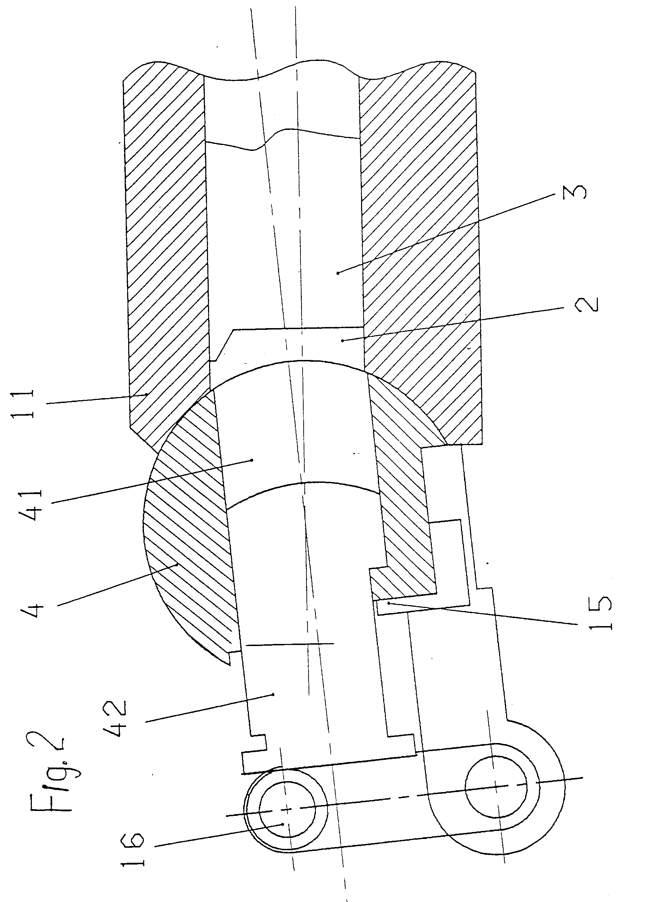

Im unteren Bereich des Maschinengestells 1 ist ein Motor 5 angeordnet der über eine Kette 51 mit einem auf einer Eingangswelle 6 eines nicht näher gezeigten Teilergetriebes sitzenden Kettenrades 61 verbunden ist. Auf der Eingangswelle 6 ist eine Nockenscheibe 8 mit zwei Nocken 81 und 82 befestigt, die mit einem Endschalter 9, der über eine Halterung 91 verstellbar am Maschinengestell 1 befestigt ist, in Wirkungsverbindung stehen. Mit 7 ist die Schalttafel bezeichnet, die mit einem Startschalter 71, Stoppschalter 72 für den Motor 5 und einem Schalter 73 für die Reinigungsstellung des Messkammerträgers 4 sowie einem Schalter 74 für die Reinigungsstellung des Füllkolbens 3 ausgerüstet ist. Alle weiteren im verkleideten Maschinengestell 1 angeordneten Kraftübertragungs-, Bedienungs-und Einstellelemente sind in der Zeichnung nicht näher dargestellt, da diese für einen Fachmann als bekannt vorausgesetzt werden (die Fig.2 entspricht im wesentlichen der Fig. 1 aus der DE 35 30 724 C1).

Zur Erreichung einer Reinigungsstellung ist es bei der erfindungsgemässen Lösung nur noch erforderlich den Schalter 73 oder 74 zu drücken und die laufende Maschine bleibt in der gewünschten Stellung stehen. Wird z.B. der Schalter 73 gedrückt, so wird über die Leitung 73' der Endschalter 9 so aktiviert, dass nach der Berührung durch den Nocken 81 der Motor 5 abgeschaltet wird und der Messkammerträger 4 in der Füllstellung (Fig.2), die der Reinigungsstellung entspricht, stehen bleibt. In dieser Stellung können nach Entfernung des Anschlagwinkels 15 und der Auswerferstange 16 die Messkolben 42 einfach aus den Messkammern 41 des Messkammerträgers 4 herausgenommen und gereinigt werden. Gleiches gilt für den Füllkolben 3, der nach dem Drücken des Schalters 74 über den Nocken 82 in seine Reinigungsstellung (Ausbauposition) angehalten wird. Anstelle des Endschalters 9 und der Nockenscheibe 8 können natürlich auch über die Schalter 73 oder 74 aktivierbare Lichtschranken oder Magnetschalter eingesetzt werden, die eine analoge Abschaltung der Teigteilmaschine in einer gewünschten Reinigungsstellung bewirken. Eine nähere Beschreibung und deren Anordnung innerhalb der Maschine ist nicht erforderlich, da es für einen Fachmann ohne weiteres möglich ist, in Abhängigkeit der verwendeten Maschinentypen (die auch unterschiedliche Reinigungsstellungen haben können) den oder die Schalter so anzuordnen, dass ein Abfragen der jeweiligen Maschinenposition und ein analoges Abschalten an der gewünschten Stellung ohne weiteres möglich ist. Er hat nur den jeweiligen Nachlauf der Maschine zu beachten. Auch für die nähere Beschreibung und Darstellung eines Schaltplanes für die im Beispiel beschriebene Lösung bedarf es keiner weiteren Erklärung, da sich hierzu für den Fachmann mehrere Varianten ergeben.

## Patentansprüche

1. Messkammerteigteilmaschine mit einem Messkammerträger (4) der so angeordnet ist, dass dieser an einer unterhalb eines Teigtrichters (11) angeordneten Füllkammer (2) teigabscherend vorbeibewegbar ist und der über einen Füllkolben (3) in die Messkammern eingepresste Teig über Messkolben (42) ausgestossen und an einen im Maschinengestell (1) angeordneten Rundwirker oder an ein Förderband übergeben wird, wobei alle bewegbaren Teile über ein Teilergetriebe und entsprechenden Übertragungselementen mit einem Antriebsmotor (5) verbunden sind, der über einen Start-Stop-Schalter (71,72) betätigbar ist, dadurch gekennzeichnet, dass zur Erzielung einer bestimmten Halteposition wenigstens ein weiterer Schalter (73;74) vorgesehen ist, über den entsprechende Mittel aktiviert werden können, die den Stop der Maschine an der Ausbaustellung der Messkolben (42) oder des Füllkolbens (3) bewirken, wobei besagte Mittel zur Abfragung der Maschinenstellung und Abschaltung in einer bestimmten Anhalteposition aus aktivierbaren Schaltern, insbesondere Licht- oder Magnetschaltern, bestehen.

2. Messkammerteigteilmaschine nach Anspruch 1 , dadurch gekennzeichnet, dass am Teilergetriebe eine Nockenscheibe (8) angeordnet ist, die mit einem über den Schalter (73) aktivierbaren Endschalter (9) in Wirkungsverbindung steht.

3. Messkammerteigteilmaschine nach Anspruch 2, dadurch gekennzeichnet, dass die Nockenscheibe (8) mit zwei Nocken (81,82) versehen ist und der Endschalter (9) über zwei Schalter (73;74) wahlweise aktivierbar ist.

## Claims

1. Dough divider with metering chamber comprising a metering chamber support (4) which is disposed such that, while cutting off dough, it can be moved past a loading chamber (2) that is disposed below a dough funnel (11), and that the dough pressed into the metering chambers by way of a loading piston (3) is discharged by metering pistons (42) and handed over to a round kneader disposed on the machine frame (1) or to a conveyor belt, all movable components being connected with a driving motor (5) by way of a branching gear and corresponding transmission elements, it being possible to operate the driving motor (5) by a start-stop switch (71, 72), characterized in that, for a certain stop position to be attained, at least one further switch (73; 74) is provided, by means of which to activate corresponding means causing the stop of the machine in the position of removal of the metering pistons (42) or of the loading piston (3), said means for detecting the position of the machine and for switch-off in a certain stop position being operatable switches, in particular light or solenoid switches.

2. Dough divider with metering chamber according to claim 1, characterized in that a cam disk (8) is disposed on the branching gear and is in working connection with a stop switch (9) to be operated by the switch (73).

3. Dough divider with metering chamber according to claim 2, characterized in that the cam disk (8) is provided with two cams (81, 82) and that the end switch (9) can be operated selectively by two switches (73; 74).

## Revendications

1. Diviseur de pâte à chambres de dosage, comportant un support (4) de chambres de dosage qui est disposé de telle sorte qu'il puisse passer devant une chambre de remplissage (2) disposée au-dessous d'une trémie de pâte (11) en sectionnant de la pâte, et dans laquelle de la pâte pressée dans les chambres de dosage par l'intermédiaire d'un piston de remplissage (3) peut être éjectée par des pistons de dosage (42) et transmise à un élément rotatif ou à une bande transporteuse disposé dans le bâti (1) de la machine, tous les éléments mobiles étant réliés, par l'intermédiaire d'une transmission du diviseur et d'éléments de transmission correspondants, à un moteur d'entraînement (5) pouvant être actionné par un commutateur marche-arrêt (71, 72), caractérisé en ce qu'on prévoit au moins un autre commutateur (73 ; 74) pour atteindre une certaine position d'arrêt, par l'intermédiaire duquel peuvent être activés des moyens correspondants qui provoquent l'arrêt de la machine dans la position de démontage des pistons de dosage (42) ou du piston de remplissage (3), lesdits moyens destinés à la détection de la position de la machine et à la coupure dans une certaine position d'arrêt étant constitués de commutateurs pouvant être activés, notamment de commutateurs photoélectriques ou magnétiques.

2. Diviseur de pâte à chambres de dosage selon la revendication 1, caractérisé en ce qu'un disque (8) à cames est disposé sur la transmission du diviseur, qui est en liaison active avec un fin de course (9) pouvant être activé par le commutateur (73).

3. Diviseur de pâte à chambres de dosage selon la revendication 2, caractérisé en ce que le disque (8) à cames comporte deux cames (81, 82), et en ce que le fin de course (9) peut être activé, au choix, par l'intermédiaire de deux commuteurs (73 ; 74).
